# EUROPÄISCHE PATENTSCHRIFT

(11) **EP 3 491 412 B1**
(45) Veröffentlichungstag und Bekanntmachung des Hinweises auf die Patenterteilung: **11.09.2019**
(21) Anmeldenummer: 17805205.6
(22) Anmeldetag: 29.11.2017
(51) Int. Cl.: G01S 7/40, G01S 13/93, G01S 7/02

(54) **VERFAHREN ZUM BETRIEB EINES RADARSENSORS UND KRAFTFAHRZEUG**
METHOD FOR OPERATING A RADAR SENSOR AND MOTOR VEHICLE
PROCÉDÉ PERMETTANT DE FAIRE FONCTIONNER UN CAPTEUR RADAR ET VÉHICULE AUTOMOBILE

(30) Priorität: 05.12.2016 DE 102016224150
(43) Veröffentlichungstag der Anmeldung: 05.06.2019
(73) Patentinhaber: AUDI AG, 85045 Ingolstadt (DE)
(72) Erfinder: KHLIFI, Rachid, 85748 Garching (DE)
(86) Internationale Anmeldenummer: PCT/EP2017/080845
(87) Internationale Veröffentlichungsnummer: WO 2018/104128

(56) Entgegenhaltungen:
- EP-A1- 3 239 733
- DE-B3-102014 017 917
- DE-B3-102015 011 020

## Beschreibung

Die Erfindung betrifft ein Verfahren zum Betrieb eines Radarsensors, der hinter einem durch Radarstrahlung durchstrahlbaren Bauteil, insbesondere einem Stoßfängerbauteil, in einem Kraftfahrzeug verbaut ist. Daneben betrifft die Erfindung ein Kraftfahrzeug mit einem solchen Radarsensor.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme. Auch die Nutzung von Radarsensoren im Innenraum des Kraftfahrzeugs wurde bereits vorgeschlagen.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Gerade die nun mögliche kleinbauende Realisierung von Radarsensoren in Halbleitertechnologie ermöglicht auf vielfältige Weise den verdeckten Verbau von Radarsensoren in einem Kraftfahrzeug. Das bedeutet, die Radarsensoren werden hinter einem zu durchstrahlenden Bauteil des Kraftfahrzeugs platziert. Beispielsweise kann vorgesehen sein, Radarsensoren in den Stoßfängern eines Kraftfahrzeugs hinter einer Kunststoffabdeckung des Stoßfängers als Stoßfängerbauteil zu platzieren. Dabei werden die Radarsensoren insbesondere in separaten Gehäusen an dem Bauteil oder an der Karosserie des Kraftfahrzeugs befestigt.

Das zu durchstrahlende Bauteil kann hierbei einen Einfluss auf die Funktion und Leistungsfähigkeit des hinter ihm verbauten Radarsensors haben. Bekannte Radarsysteme weisen dabei eine relativ ungenaue Richtcharakteristik auf, wobei eine exakte und genau reproduzierbare Anordnung der Radarsensoren an dem Bauteil beziehungsweise an der Karosserie mit einem hohen Aufwand und damit hohen Kosten verbunden ist.

Daher ist es bekannt, um eine möglichst optimale Funktionsweise des verdeckten Radarsensors hinter dem Bauteil zu erreichen, den Radarsensor speziell auf seine aktuelle Verbausituation zu kalibrieren, damit einerseits die Winkelverzerrung und Dämpfung durch das Bauteil und andererseits die Toleranzen bei der Montage korrigiert werden können.

Problematisch wird dies bei Reparaturarbeiten im Bereich des Bauteils, da hierdurch die Performance des Radarsensors verändert werden kann. Wird beispielsweise ein Stoßfängerbauteil als zu durchstrahlendes Bauteil demontiert und wieder angebaut, kann sich die Einbausituation des Radarsensors verändern, was wiederum zu einer Leistungsdegradation des Radarsensors führen kann. Mithin ist eine erneute Kalibrierung des Radarsensors, also eine Neukalibrierung, notwendig, wobei die entsprechende notwendige Prozedur für eine solche Neukalibrierung beispielsweise in einer Betriebsanleitung des Kraftfahrzeugs beschrieben sein kann. Wird eine derartige Neukalibrierung nicht vorgenommen, ist die volle Funktionalität des Radarsensors nicht gewährleistet, so dass insbesondere die Funktionalität von Radardaten des Radarsensors nutzenden Fahrzeugsystemen, insbesondere Fahrerassistenzsystemen, eingeschränkt sein kann.

DE 10 2014 017 917 B3 betrifft ein Verfahren zum Konfigurieren wenigstens eines an einer von mehreren Einbaupositionen in einem Kraftfahrzeug verbauten Radarsensors hinsichtlich der Einbauposition. Dabei wird vorgeschlagen, eine einbaupositionspezifische, von dem verbauten Radarsensor erfassbare Identifikationsstruktur vorzusehen, wobei die Konfiguration des Radarsensors auf die Einbauposition in Abhängigkeit von die Identifikationsstruktur beschreibenden Radardaten erfolgen soll. Hierdurch ist eine Art Kodierung realisiert, die zur korrekten Konfiguration des Radarsensors genutzt werden kann, nachdem die Identifikationsstruktur die Einbauposition beschreibt. Somit können insbesondere komplett gleiche Radarsensoren für alle Einbaupositionen verwendet werden.

Der Erfindung liegt daher die Aufgabe zugrunde, die Wahrscheinlichkeit einer vergessenen Neukalibrierung bei einem hinter einem zu durchstrahlenden Bauteil verbauten Radarsensor zu reduzieren.

Zur Lösung dieser Aufgabe ist bei einem Verfahren der eingangs genannten Art erfindungsgemäß vorgesehen, dass bei einer Demontage des Bauteils von dem Kraftfahrzeug weiterhin Radardaten mit dem Radarsensor aufgenommen werden, wobei bei Erkennung der Demontage des Bauteils durch ein die Radardaten auswertendes Demontagekriterium nach einem Wiedereinbau des Bauteils eine eine notwendige Neukalibrierung anzeigende Kalibrierungsinformation erzeugt und zum Anstoßen der Neukalibrierung verwendet wird, wobei das Demontagekriterium ein Rauschniveau in den Radardaten auswertet.

Erfindungsgemäß wird mithin vorgeschlagen, auch bei baulichen Maßnahmen, die die Einbausituation des Radarsensors verändern können, weiter Radardaten aufzunehmen und diese auszuwerten, um die Veränderung im Umfeld des Radarsensors zu erkennen und die Notwendigkeit der erneuten Kalibrierung des Radarsensors anzumelden. Dem liegt die Erkenntnis zugrunde, dass Maßnahmen in der Einbauumgebung des Radarsensors auch Veränderungen in dessen Detektion zur Folge haben, die in den Radardaten erkennbar sind, und so eine Klassifizierung einer eingetretenen Veränderung der Umgebung, die eine Neukalibrierung erforderlich macht, ermöglichen. Hierzu ist mithin ein Demontagekriterium vorgesehen, das die Radardaten auswertet und Eigenschaften derselben nutzt, um insbesondere Vergleiche durchzuführen, die eindeutig auf eine Veränderung der Einbausituation durch eine bauliche Maßnahme an dem Bauteil, mithin insbesondere eine Demontage des Bauteils, hinweisen. Dabei wird insbesondere ausgenutzt, dass es durchaus gängig ist, Radarsensoren auch nach Deaktivierung des Motors und/oder der Zündung des Kraftfahrzeugs noch weiter zu betreiben, beispielsweise im Sinne einer Nachlaufzeit, oder zumindest weiterbetreibbar zu gestalten, mithin die Radardaten zu erhalten, die die Demontage des Bauteils anzeigen.

Auf diese Weise kann die Demontage des Bauteils und eine somit mit hoher Wahrscheinlichkeit eingetretene Veränderung der Einbausituation nach Wiedermontage des Bauteils verlässlich aus dem Radardaten selbst erkannt werden und es kann nach dem Wiedereinbau eine eine notwendige Neukalibrierung anzeigende Kalibrierungsinformation erzeugt werden, die zum Anstoßen der Neukalibrierung verwendet wird, insbesondere durch Ausgabe eines entsprechenden Hinweises an einen Nutzer des Kraftfahrzeugs und/oder das Personal, das die Demontage und den Wiedereinbau vorgenommen hat. Dabei kann insbesondere vorgesehen sein, dass der Wiedereinbau des Bauteils durch einen Wegfall der Erfüllung des Demontagekriteriums, insbesondere bei einem temporär deaktivierten Radarsensor bei einer Wiederinbetriebnahme des Radarsensors, detektiert wird. Nachdem der Wegfall des Bauteils von dem Kraftfahrzeug durch den Radarsensor detektiert werden kann, ist es mithin auch möglich, das erneute Vorhandensein des Bauteils zu detektieren, insbesondere, da sich eine Dekalibrierung üblicherweise nur sehr wenig auf den unmittelbaren Nahbereich des Radarsensors, in dem das Bauteil angeordnet ist, auswirkt. Neben einem Wegfall der Erfüllung des Demontagekriteriums kann selbstverständlich auch vorgesehen werden, ein gezieltes Montagekriterium zu formulieren, das den Wiedereinbau des Bauteils anzeigt.

Die vorliegende Erfindung sieht vor, dass das Demontagekriterium ein Rauschniveau in den Radardaten auswertet. Es hat sich gezeigt, dass in beiden denkbaren, grundsätzlich zu unterscheidenden Fällen, nämlich zum einen, dass der Radarsensor an der Karosserie befestigt ist und nicht mit dem Bauteil demontiert wird, und zum anderen, dass der Radarsensor an dem Bauteil befestigt ist und mit diesem demontiert wird, eine Veränderung des Rauschniveaus, beispielsweise des Signal-zu-Rauschverhältnisses, zu beobachten ist. Beispielsweise kann das Rauschniveau durch eine Bestimmung eines Signal-zu-Rauschverhältnisses (SNR) quantifiziert werden.

So kann in einem ersten Fall vorgesehen sein, dass der Radarsensor an dem Bauteil befestigt ist und mit dem Bauteil abmontiert wird. Dann kann vorgesehen sein, dass durch das Demontagekriterium die Überschreitung eines Rauschschwellwerts durch das Rauschniveau überprüft und/oder ein Rauschniveauverlauf mit abgespeicherten, für einen Demontagevorgang typischen Rauschniveauverläufen verglichen wird. Ist der Sensor mithin am Bauteil, insbesondere einem Stoßfängerbauteil, verbaut, wird üblicherweise erst nach Demontage des Bauteils eine Leitungsverbindung zu dem Radarsensor abgesteckt. Das bedeutet, während der Demontage ist der Radarsensor weiterhin aktiv und erkennt die Veränderung seiner Lage durch Interpretation der typischen Reflektionsmuster bei Demontage des Stoßfängers beziehungsweise die Veränderung des Rauschverhaltens. Beispielsweise kann also der Radarsensor (beziehungsweise eine externe, die Radardaten auswertende Steuereinrichtung) kurz vor dem Trennen der Energieversorgung die Demontage erkennen, so dass diese Tatsache insbesondere gespeichert werden kann. Bei der Montage des Bauteils wird der Radarsensor wieder angeschlossen und es kann festgestellt werden, dass ein Wiedereinbau erfolgt ist.

Konkret bezüglich des Rauschniveaus ist bei einem an dem Bauteil, insbesondere einem Stoßfängerbauteil, befestigten Radarsensor festzuhalten, dass das Rauschniveau in den Radardaten üblicherweise erhöht werden wird. Hierfür liegen mehrere Gründe vor. Zum einen wirkt die üblicherweise hinter dem Sensor befindliche, metallische Karosserie wie eine verlängerte Antenne des Radarsensors und senkt so das Rauschniveau. Wird der Radarsensor mit dem Bauteil demontiert, fällt die metallische Struktur der Karosserie hinter dem Radarsensor weg, so dass sich das Rauschniveau erhöht. Das Rauschniveau durch das Bauteil bleibt jedoch gleichzeitig erhalten. Es kann vorgesehen sein, dass das demontierte Bauteil auf dem Boden platziert wird, so dass das Rauschlevel in den Radardaten weiter erhöht wird, da starke Reflektionen von dem Boden auftreten, beispielsweise durch den sogenannten "Bodenclutter". Mithin kann ein Grenzwert festgelegt werden, beispielsweise für das Signal-zu-Rauschverhältnis, bei dessen Überschreitung davon ausgegangen werden kann, dass der Radarsensor mitsamt dem Bauteil demontiert wurde.

Alternativ oder zusätzlich ist es jedoch auch denkbar, einen Rauschniveauverlauf zu betrachten, der typisch für die Demontage des Bauteils ist. Beispielsweise wird bei der Demontage eines Stoßfängerbauteils, beispielsweise einer Kunststoffabdeckung, an der der Radarsensor befestigt ist, dieses zunächst gelöst und von dem Kraftfahrzeug (und mithin der metallischen Karosserie) entfernt, wonach es auf dem Boden abgelegt wird und auch Rauschniveau durch den Boden hinzukommt. Beispielsweise kann innerhalb des Radarsensors und/oder einer die Radardaten auswertenden Steuereinrichtung eine Datenbank vorgesehen werden, die typische Demontage-Rauschniveauverläufe enthält, mit denen der tatsächlich festgestellte Rauschniveauverlauf verglichen werden kann.

Ist in einer alternativen Ausgestaltung vorgesehen, dass der Radarsensor an einer Karosserie des Kraftfahrzeugs befestigt ist und nicht mit dem Bauteil abgenommen wird, sieht eine zweckmäßige Weiterbildung vor, dass durch das Demontagekriterium die Unterschreitung eines Rauschschwellwerts durch das Rauschniveau überprüft wird. Ist mithin der Radarsensor an der Karosserie fest verbaut und wird das Bauteil, beispielsweise ein Stoßfängerbauteil, vor dem Radarsensor demontiert, fällt eine Quelle für Rauschen weg, da das Bauteil nicht mehr vorhanden ist. Dennoch gilt weiter, dass die metallische Karosserie wie eine verlängerte Antenne des Radarsensors wirkt, so dass insgesamt ein äußerst niedriges Rauschniveau, beispielsweise wiederum messbar anhand des Signal-zu-Rauschverhältnisses, entsteht.

Zusätzlich oder alternativ zur Betrachtung des Rauschniveaus kann bei einem an der Karosserie des Kraftfahrzeugs befestigten, nicht mit dem Bauteil abgenommenen Radarsensor auch vorgesehen sein, dass durch das Demontagekriterium ein Wegfall von Kurzreichweitenreflexionen, insbesondere in einem vorgegebenen, das Bauteil im eingebauten Zustand umfassenden Abstandsbereich, überprüft wird. In den Radarraten kann also erkannt werden, dass keine Reflexionen in bestimmtem Abstand mehr detektierbar sind. Befindet sich beispielsweise das Bauteil in einem Abstand von 10 cm zur Antennenanordnung des Radarsensors, kann ein Abstandsbereich um diesen Abstand festgelegt werden, beispielsweise um 10 cm +/- 0,5 cm, der auf das Vorliegen von Reflexionen überprüft wird. Fällt das Bauteil weg, fallen mithin auch diese Reflexionen weg.

Eine allgemeine, besonders bevorzugte Weiterbildung der vorliegenden Erfindung sieht vor, dass die Überprüfung des Demontagekriteriums innerhalb des Radarsensors, insbesondere durch eine Steuereinheit des Radarsensors, erfolgt. Gerade dann, wenn auf Halbleitertechnologie basierende Radarsensoren verwendet werden, können diese bereits eine gewisse Eigenintelligenz aufweisen, die es ermöglicht, das Demontagekriterium für jeden Radarsensor innerhalb des Radarsensors selbst zu überwachen. So kann beispielsweise vorgesehen sein, dass ein auf Halbleitertechnologie, insbesondere CMOS-Technologie, basierender Radarsensor mit einer durch einen Halbleiterchip realisierten Steuereinheit verwendet wird, wobei die Steuereinheit die Erfüllung des Demontagekriteriums überprüft. Somit werden vorteilhaft die in Halbleitertechnologie, insbesondere CMOS-Technologie, gegebenen Zusatzfähigkeiten des Radarsensors auch im Rahmen einer Überwachung, ob eine bauliche Maßnahme an dem Bauteil stattfindet, genutzt. Der erwähnte Halbleiterchip kann neben der Steuereinheit auch einen Radartransceiver des Radarsensors und/oder eine digitale Signalverarbeitungskomponente des Radarsensors realisieren und/oder als ein Package mit einer Antennenanordnung des Radarsensors realisiert sein. Bei Verwendung eines derartigen, kleinbauenden Radarsensors ergeben sich auch Vorteile durch das verbesserte Signal-zu-Rauschverhältnis insgesamt und die Fähigkeit, auch im Ultranahbereich Reflexionen zu vermessen, da dann beispielsweise deutlich einfacher überprüft werden kann, ob das Bauteil noch vorhanden ist und/oder sich äußere Rauscheinflüsse deutlicher im Rauschniveau widerspiegeln.

Zweckmäßig kann es ferner sein, wenn, insbesondere bei an dem Bauteil befestigten und mit dem Bauteil abmontierten Radarsensor, die Radardaten und/oder die Erfüllung des Demontagekriterium beschreibende Demontagedaten innerhalb des Radarsensors gespeichert werden. Ist der Radarsensor an dem Bauteil befestigt, wird er üblicherweise von seiner Energieversorgung (und auch der Datenverbindung) getrennt, beispielsweise durch Lösen eines Steckers, so dass es zweckmäßig sein kann, die Radardaten und/oder die Erfüllung des Demontagekriteriums beschreibende Demontagedaten innerhalb des Radarsensors zu speichern, damit auch nach dem Ausschalten des Radarsensors die Informationen nicht verloren gehen.

In einer bevorzugten Ausgestaltung kann vorgesehen sein, dass bei Vorliegen einer Kalibrierungsinformation ein Neukalibrierungshinweis an einer Anzeigeeinrichtung des Kraftfahrzeugs, insbesondere einer Instrumententafel und/oder einem Multifunktionsdisplay, ausgegeben wird. Beispielsweise kann mithin ein Nutzer des Kraftfahrzeugs auf die Notwendigkeit der Prozedur zur Neukalibrierung des Radarsensors aufmerksam gemacht werden, indem ein entsprechender Hinweis optisch und/oder akustisch an einer Anzeigeeinrichtung des Kraftfahrzeugs, insbesondere einer Instrumententafel und/oder einem Multifunktionsdisplay (Kombinationsdisplay), ausgegeben wird. Der Nutzer kann dann manuell den Neukalibrierungsprozess einleiten.

Ist auch eine automatische Einleitung des Kalibrierungsprozesses denkbar, beispielsweise, wenn das Vorliegen notwendiger Bedingungen für eine Neukalibrierung durch das Kraftfahrzeug selbst überprüft werden kann, kann die Kalibrierungsinformation selbstverständlich auch genutzt werden, um automatisch bei Erfüllung eines entsprechenden Neukalibrierungskriteriums eine Neukalibrierung des Radarsensors auszulösen.

Neben dem Verfahren betrifft die vorliegende Erfindung auch ein Kraftfahrzeugs, aufweisend einen hinter einem zu durchstrahlenden Bauteil, insbesondere einem Stoßfängerbauteil, angeordneten Radarsensor und eine zur Durchführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchem ebenso die bereits genannten Vorteile erhalten werden können. Insbesondere kann die Steuereinrichtung wenigstens teilweise eine Steuereinheit des Radarsensors umfassen, welcher vorzugsweise in Halbleitertechnologie realisiert ist.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen an der Karosserie befestigten Radarsensor bei vorhandenem Bauteil,
- Fig. 3: die Situation der Fig. 2 bei entferntem Bauteil,
- Fig. 4: eine Veränderung des Rauschniveaus bei Entfernung des Bauteils,
- Fig. 5: einen an dem Bauteil befestigten Radarsensor bei vorhandenem Bauteil,
- Fig. 6: die Situation der Fig. 5 bei Demontage des Bauteils, und
- Fig. 7: eine Veränderung des Rauschniveaus bei Demontage des Bauteils.

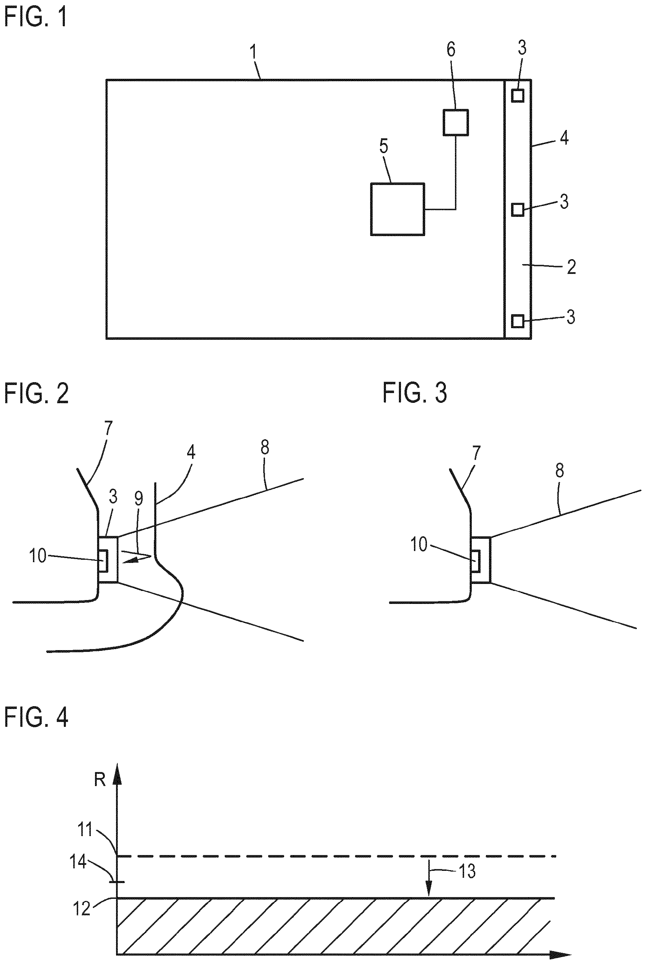

Fig. 1 zeigt eine Prinzipskizze eines erfindungsgemäßen Kraftfahrzeugs 1. Ersichtlich weist das Kraftfahrzeug 1 einen vorderen Stoßfänger 2 auf, in dem vorliegend drei Radarsensoren 3 verdeckt verbaut sind, konkret hinter dem hier als Stoßfängerbauteil ausgebildeten, für Radarstrahlung durchlässigen Bauteil 4, beispielsweise einer Kunststoffabdeckung.

Das Kraftfahrzeug 1 weist nun ferner eine Steuereinrichtung 5 auf, die auch wenigstens teilweise durch Steuereinheiten der Radarsensoren 3 realisiert sein kann. Die Radarsensoren 3 sind vorliegend in Halbleitertechnologie, konkret CMOS-Technologie, realisiert. Die Radarsensoren 3 weisen mithin einen Halbleiterchip auf, der vorliegend neben einem Radartransceiver auch eine digitale Signalverarbeitungskomponente des Radarsensors 3 und die bereits erwähnte Steuereinheit des Radarsensors 3 realisiert. Der Halbleiterchip kann als ein Package mit einer Antennenanordnung des Radarsensors 3 realisiert sein, so dass sich eine äußerst kleinbauende Realisierung der Radarsensoren 3 ergibt, wobei beispielsweise das Package auf einer Leiterplatte angeordnet sein kann, die innerhalb eines Gehäuses des Radarsensors 3 gelagert ist.

Die Steuereinrichtung 5 kann generell zur Auswertung von Radardaten der Radarsensoren 3 ausgebildet sein; in jedem Fall ist sie zur Durchführung des erfindungsgemäßen Verfahrens ausgebildet. Das bedeutet, dass Radardaten der Radarsensoren 3 an die Steuereinrichtung 5 übertragen werden, insbesondere solche, die auf die Erfüllung eines Demontagekriteriums überwacht werden, welches anzeigt, dass das Bauteil 4 von dem Kraftfahrzeug 1 entfernt wird. Wird, insbesondere durch Wegfall der Erfüllung des Demontagekriteriums, festgestellt, dass das Bauteil 4 wieder an dem Kraftfahrzeug 1 vorhanden ist, wird eine Kalibrierungsinformation erzeugt, welche dazu führt, dass ein entsprechender Neukalibrierungshinweis an einer Anzeigeeinrichtung 6 des Kraftfahrzeugs 1 ausgegeben wird. Die Anzeigeeinrichtung 6 ist als ein Multifunktionsdisplay ausgestaltet und an einer Instrumententafel des Kraftfahrzeugs 1 angeordnet.

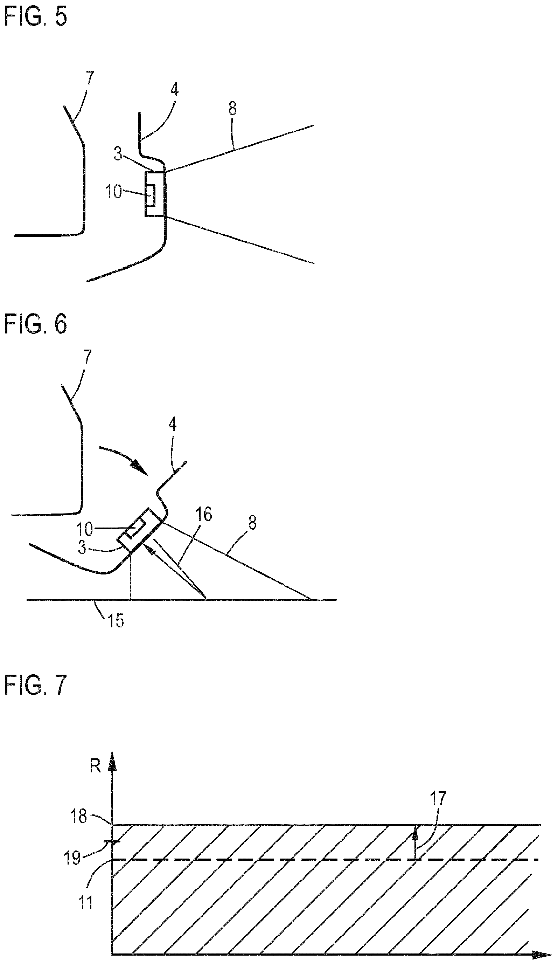

Die Radarsensoren 3 können auf unterschiedliche Art und Weise hinter dem Bauteil 4 vorgesehen sein, nämlich zum einen an einer Karosserie befestigt (vgl. Figuren 2 bis 4), zum anderen an dem Bauteil 4 selbst befestigt (vgl. Figuren 5 bis 7).

Fig. 2 zeigt hierbei schematisch die Befestigung des Radarsensors 3 an einer metallischen Karosserie 7 des Kraftfahrzeugs 1 gemeinsam mit dem Bauteil 4. Zudem ist der Erfassungsbereich 8 des Radarsensors 3 angedeutet. Ersichtlich kann es durch das Vorhandensein des Bauteils 4 nicht nur zu durch die Kalibrierung möglichst weitgehend zu behebenden Messeffekten kommen, sondern insbesondere auch zu durch den Pfeil 9 angedeuteten Nahbereichsreflexionen. Zusätzlich zu der allgemeinen Gegenwart des zu durchstrahlenden Bauteils 4 erhöhen auch diese das Rauschniveau im Radarsensor 3.

Fig. 3 zeigt zum Vergleich die Situation bei abmontiertem Bauteil 4. Ersichtlich fallen die störenden Effekte des Bauteils 4 weg, so dass aus einem bestimmten Abstandsbereich, in dem das Bauteil 4 lag, beispielsweise 10 cm +/- 0,5 cm, keine Reflexionen mehr empfangen werden und auch das Rauschniveau, quantifiziert durch das Signal-zu-Rauschverhältnis, allgemein sinkt. Dies ist in Fig. 4 schematisch dargestellt, wobei der Wert 11 für das Rauschniveau R das Rauschniveau im Normalbetrieb bei vorhandenem Bauteil 4 anzeigt, der Wert 12 das gemäß dem Pfeil 13 abgesunkene Rauschniveau nach der Entfernung des Bauteils 4. Zu diesem Effekt trägt auch bei, dass die Karosserie 7 als eine Art Antennenerweiterung wirkt und weiterhin vorhanden bleibt.

Die Überprüfung des Demontagekriteriums erfolgt hierbei im Übrigen seitens des Radarsensors 3 selber, konkret in der bereits erwähnten Steuereinheit 10, die einen Teil der Steuereinrichtung 5 bildet. Neben der Überprüfung der Absenkung des Rauschniveaus, wobei beispielsweise ein Rauschschwellwert 14, vgl. Fig. 4, angezogen werden kann, kann in dem Montagekriterium auch überwacht werden, ob Reflexionen in dem erwähnten Abstandsbereich auftreten.

Fig. 5 zeigt nun den Fall eines an dem Bauteil 4 befestigten Radarsensors 3. Die metallische Karosserie 7 befindet sich weiterhin hinter dem Radarsensor 3 und verringert als Erweiterung der Antennenanordnung wirkend das Rauschniveau. Wird nun, vgl. Fig. 6, das Bauteil 4 mit dem Radarsensor 3 abgenommen, ist der Radarsensor 3 üblicherweise noch nicht abgesteckt und kann weiter messen. Die metallische Karosserie 7 entfernt sich und fällt weg, während zudem der Boden 15, auf dem das Bauteil 4 abgelegt wird, verstärkt in den Erfassungsbereich 8 gerät, so dass durch Bodenclutter, angedeutet durch den Pfeil 16, eine zusätzliche Anhebung des Rauschniveaus auftritt. Das zu durchstrahlende Bauteil 4 bleibt als Rauschquelle ebenso weiterhin erhalten.

Im Ergebnis, vgl. Fig. 7, erhöht sich das Rauschniveau R, symbolisiert durch den Pfeil 17, von dem im Betrieb üblichen Wert 11 auf einen Wert 18, der oberhalb eines im Demontagekriterium genutzten Rauschschwellwerts 19 liegt. Dies kann, beispielsweise quantifiziert über das Signal-zu-Verhältnis, innerhalb der Steuereinheit 10 durch Auswertung der Radardaten festgestellt werden. Zusätzlich ist es im Rahmen des Demontagekriteriums auch denkbar, wenn typische Rauschniveauverläufe für einen Demontagevorgang vorliegen, den aktuellen Rauschniveauverlauf mit diesen typischen Rauschniveauverläufen in der Datenbank zu vergleichen und beispielsweise einen Korrelationswert zu bestimmen, der wiederum gegen einen Korrelationsschwellwert verglichen wird, um das Feststellen eines Demontagevorgangs zu ermöglichen.

Nachdem der Radarsensor 10 nach der Demontage des Bauteils 4 üblicherweise von seiner Energieversorgung getrennt wird und ausgeschaltet wird, wird zweckmäßigerweise die Erfüllung des Demontagekriteriums als Demontagedaten gemeinsam mit den Radardaten, die zu dieser Beurteilung geführt haben, in einer Speichereinrichtung des Radarsensors 3 fest abgespeichert, um nach der Wiederinbetriebnahme als Information wieder vorzuliegen.

Es sei abschließend noch angemerkt, dass bei mehreren hinter demselben Bauteil angeordneten Radarsensoren 4 die Steuereinrichtung 5 auch ausgebildet sein kann, die Erfüllung von Demontagekriterien und/oder vorliegende Kalibrierungsinformationen gegeneinander zu plausibilisieren, wenn das Bauteil 4 nur als Ganzes demontiert werden kann. Dies erhöht die Zuverlässigkeit der Kalibrierungsinformation weiter.

## Patentansprüche

1. Verfahren zum Betrieb eines Radarsensors (3), der hinter einem durch Radarstrahlung durchstrahlbaren Bauteil (4), insbesondere einem Stoßfängerbauteil, in einem Kraftfahrzeug (1) verbaut ist,
**dadurch gekennzeichnet,**
**dass** bei einer Demontage des Bauteils (4) von dem Kraftfahrzeug (1) weiterhin Radardaten mit dem Radarsensor (3) aufgenommen werden, wobei bei Erkennung der Demontage des Bauteils (4) durch ein aus den Radardaten ermitteltes Demontagekriterium nach einem Wiedereinbau des Bauteils (4) eine eine notwendige Neukalibrierung des Radarsensors (3) anzeigende Kalibrierungsinformation erzeugt und zum Anstoßen der Neukalibrierung des Radarsensors (3) verwendet wird, wobei zur Ermittlung des Demontagekriteriums ein Rauschniveau in den Radardaten ausgewertet wird

2. Verfahren nach Anspruch 1,
**dadurch gekennzeichnet,**
**dass** der Wiedereinbau des Bauteils (4) durch einen Wegfall der Erfüllung des Demontagekriteriums, insbesondere bei einer Wiederinbetriebnahme des Radarsensors (3), detektiert wird.

3. Verfahren nach Anspruch 1 oder 2,
**dadurch gekennzeichnet,**
**dass** bei einem an dem Bauteil (4) befestigten und mit dem Bauteil (4) abmontierten Radarsensor (3) das Demontagekriterium in Form einer Überschreitung eines Rauschschwellwerts (14, 19) durch das Rauschniveau und/oder über einen Vergleich eines Rauschniveauverlaufs mit abgespeicherten, für einen Demontagevorgang typischen Rauschniveauverläufen ermittelt wird.

4. Verfahren nach Anspruch 1 oder 2,
**dadurch gekennzeichnet,**
**dass** bei einem an einer Karosserie (7) des Kraftfahrzeugs (1) befestigten, nicht mit dem Bauteil (4) abgenommenen Radarsensor (3) als das Demontagekriterium eine Unterschreitung eines Rauschschwellwerts (14, 19) durch das Rauschniveau überprüft wird.

5. Verfahren nach einem der vorangehenden Ansprüche, **dadurch gekennzeichnet,**
**dass** die Überprüfung des Demontagekriteriums innerhalb des Radarsensors (3), insbesondere durch eine Steuereinheit (10) des Radarsensors (3), erfolgt.

6. Verfahren nach Anspruch 5 **dadurch gekennzeichnet,**
**dass** ein auf Halbleitertechnologie basierender Radarsensor (3) mit einer durch einen Halbleiterchip realisierten Steuereinheit (10) verwendet wird, wobei die Steuereinheit (10) die Erfüllung des Demontagekriteriums überprüft.

7. Verfahren nach Anspruch 5 oder 6 **dadurch gekennzeichnet,**
**dass**, insbesondere bei an dem Bauteil (4) befestigten und mit dem Bauteil (4) abmontierten Radarsensor (3), die Radardaten und/oder die Erfüllung des Demontagekriteriums beschreibende Demontagedaten innerhalb des Radarsensors (3) gespeichert werden.

8. Verfahren nach einem der vorangehenden Ansprüche, **dadurch gekennzeichnet,**
**dass** bei Vorliegen einer Kalibrierungsinformation ein Neukalibrierungshinweis an einer Anzeigeeinrichtung (6) des Kraftfahrzeugs (1), insbesondere einer Instrumententafel und/oder einem Multifunktionsdisplay, ausgegeben wird

9. Kraftfahrzeug (1), aufweisend einen hinter einem zu durchstrahlenden Bauteil (4), insbesondere einem Stoßfängerbauteil, angeordneten Radarsensor (3) und eine zur Durchführung eines Verfahrens nach einem der vorangehenden Ansprüche ausgebildete Steuereinrichtung (5).

## Claims

1. Method for operating a radar sensor (3) which is installed in a motor vehicle (1) behind a component (4), in particular a bumper component, which can be radiographed by radar radiation,
**characterised in that**
when the component (4) is disassembled from the motor vehicle (1), radar data are also recorded with the radar sensor (3), wherein, upon recognition of the disassembly of the component (4) using a disassembly criterion determined from the radar data, calibration information indicating a necessary recalibration of the radar sensor (3) is generated after reinstallation of the component (4) and is used to initiate the recalibration of the radar sensor (3), wherein a noise level in the radar data is evaluated to determine the disassembly criterion.

2. Method according to claim 1,
**characterised in that**
the reinstallation of the component (4) is detected due to the disassembly criterion not being fulfilled, in particular when the radar sensor (3) is restarted.

3. Method according to claim 1 or 2,
**characterised in that**
in the case of a radar sensor (3) which is attached to the component (4) and dismantled with the component (4), the disassembly criterion is determined in the form of a noise threshold value (14, 19) being exceeded by the noise level and/or through a comparison of a noise level profile with stored noise level profiles which are typical for a dismantling operation.

4. Method according to claim 1 or 2,
**characterised in that**,
in the case of a radar sensor (3) which is attached to a body (7) of the motor vehicle (1) and is not removed with the component (4), the disassembly criterion that is checked is whether the noise level falls below a noise threshold value (14, 19).

5. Method according to any of the preceding claims,
**characterised in that**
the disassembly criterion is checked within the radar sensor (3), in particular by a control unit (10) of the radar sensor (3).

6. Method according to claim 5,
**characterised in that**
a radar sensor (3) based on semiconductor technology with a control unit (10) realised by a semiconductor chip is used, wherein the control unit (10) checks whether the disassembly criterion is fulfilled.

7. Method according to claim 5 or 6,
**characterised in that**,
in particular in the case of a radar sensor (3) which is attached to the component (4) and dismantled with the component (4), the radar data and/or the disassembly data describing the fulfilment of the disassembly criterion are stored within the radar sensor (3).

8. Method according to any of the preceding claims,
**characterised in that**
if calibration information is present, a recalibration notification is output on a display device (6) of the motor vehicle (1), in particular an instrument panel and/or a multifunction display.

9. Motor vehicle (1), having a radar sensor (3) arranged behind a component (4) to be radiographed, in particular a bumper component, and a control device (5) designed to perform a method according to any of the preceding claims.

## Revendications

1. Procédé de fonctionnement d'un capteur radar (3), qui est monté derrière un composant (4) irradiable par un rayonnement radar, en particulier un composant pare-chocs, dans un véhicule automobile (1),
**caractérisé en ce**
**que** lors d'un démontage du composant (4) du véhicule automobile (1), des données radar continuent d'être enregistrées avec le capteur radar (3),
dans lequel lors de la détection du démontage du composant (4) par un critère de démontage déterminé à partir des données radar après un remontage du composant (4), une information de calibrage affichant un recalibrage nécessaire du capteur radar (3) est générée et est utilisée pour initier le recalibrage du capteur radar (3), dans lequel un niveau de bruit dans les données radar est évalué pour la détermination du critère de démontage.

2. Procédé selon la revendication 1,
**caractérisé en ce**
**que** le remontage du composant (4) est détecté par une disparition de la satisfaction du critère de démontage, en particulier lors d'une remise en service du capteur radar (3).

3. Procédé selon la revendication 1 ou 2,
**caractérisé en ce**
**que** dans le cas d'un capteur radar (3) fixé sur le composant (4) et démonté avec le composant (4), le critère de démontage est déterminé sous la forme d'un dépassement d'une valeur seuil de bruit (14, 19) par le niveau de bruit et/ou par le biais d'une comparaison d'une allure de niveau de bruit avec des allures de niveau de bruit enregistrées, typiques pour une opération de démontage.

4. Procédé selon la revendication 1 ou 2,
**caractérisé en ce**
**que** dans le cas d'un capteur radar (3) fixé sur une carrosserie (7) du véhicule automobile (1), non démonté avec le composant (4), un sous-dépassement d'une valeur seuil de bruit (14,19) par le niveau de bruit est contrôlé en tant que critère de démontage.

5. Procédé selon l'une quelconque des revendications précédentes,
**caractérisé en ce**
**que** le contrôle du critère de démontage a lieu à l'intérieur du capteur radar (3), en particulier par une unité de commande (10) du capteur radar (3).

6. Procédé selon la revendication 5,
**caractérisé en ce**
**qu'**un capteur radar (3) se basant sur la technologie des semi-conducteurs est utilisé avec une unité de commande (10) réalisée par une puce de semi-conducteur, dans lequel l'unité de commande (10) contrôle la satisfaction du critère de démontage.

7. Procédé selon la revendication 5 ou 6,
**caractérisé en ce**
**que**, en particulier dans le cas d'un capteur radar (3) fixé sur le composant (4) et démonté avec le composant (4), les données radars et/ou des données de démontage décrivant la satisfaction du critère de démontage sont enregistrées à l'intérieur du capteur radar (3).

8. Procédé selon l'une quelconque des revendications précédentes,
**caractérisé en ce**
**qu'**en présence d'une information de calibrage, une indication de recalibrage est émise à un dispositif d'affichage (6) du véhicule automobile (1), en particulier à un tableau de bord et/ou à un écran multifonction.

9. Véhicule automobile (1), présentant un capteur radar (3) agencé derrière un composant à irradier (4), en particulier un composant pare-chocs, et un dispositif de commande (5) réalisé pour l'exécution d'un procédé selon l'une quelconque des revendications précédentes.
